# EUROPÄISCHE PATENTANMELDUNG

(11) **EP 3 879 363 A1**
(43) Veröffentlichungstag der Anmeldung: **15.09.2021**
(21) Anmeldenummer: 20212354.3
(22) Anmeldetag: 08.12.2020
(51) Int. Cl.: G05B 19/042

(54) **SYSTEM ZUM DATENAUSTAUSCH**

(30) Priorität: 13.03.2020 DE 102020106925
(71) Anmelder: CLAAS Global Sales GmbH, 33428 Harsewinkel (DE)
(72) Erfinder: Oldenburg, Joachim, 33428 Harsewinkel (DE)
(74) Vertreter: CLAAS Gruppe

(57) **Zusammenfassung**

Die vorliegende Erfindung betrifft ein System (100) zum Datenaustausch zwischen zumindest einer Steuereinheit (11) einer landwirtschaftlichen Arbeitsmaschine (1, 2) und zumindest einer entfernten Datenverarbeitungsvorrichtung (12, 14, 15,16), wobei die zumindest eine Steuereinheit (11) und die zumindest eine entfernte Datenverarbeitungsvorrichtung (12, 14, 15,16) durch ein Kommunikationsmittel (13) zum bidirektionalen Datenaustausch mittelbar oder unmittelbar miteinander verbunden sind, wobei die zumindest eine Steuereinheit (11) eine Recheneinheit (20) und eine Eingabe-Ausgabeeinheit (21) umfasst, mittels derer die Steuereinheit (11) dazu eingerichtet ist, dass eine Bedienperson (30) der Arbeitsmaschine (1) eine Auswahl von zu übermittelnden Daten trifft, deren Transfer zwischen der zumindest einen Steuereinheit (11) und der zumindest einen entfernten Datenverarbeitungsvorrichtung (12, 14, 15,16) erfolgen soll.

## Beschreibung

Die vorliegende Erfindung betrifft ein System zum Datenaustausch zwischen zumindest einer Steuereinheit einer landwirtschaftlichen Arbeitsmaschine und zumindest einer entfernten Datenverarbeitungsvorrichtung gemäß dem Oberbegriff des Anspruches 1.

Aus der DE 195 14 223 B4 ist ein Verfahren und eine Einrichtung zur Einsatzoptimierung von landwirtschaftlichen Arbeitsmaschinen bekannt. Hierzu steht die Arbeitsmaschine mit einer entfernten, als Leitrechner ausgeführten, Datenverarbeitungsvorrichtung durch eine telemetrische Datenverbindung in ständigem bidirektionalen Datenaustausch. Die Arbeitsmaschine umfasst eine als Bordrechner ausgeführte Steuereinheit, welche Daten der landwirtschaftlichen Arbeitsmaschine akquiriert, deren Auswertung durch den entfernten Leitrechner Rückschlüsse auf einen aktuellen Betriebszustand der Arbeitsmaschine zulässt, um diesen zu protokollieren. Darüber hinaus dient die Auswertung durch den Leitrechner dazu, Unregelmäßigkeiten im Betriebsablauf der Arbeitsmaschine zu erfassen und entsprechende Warnhinweise zu generieren, die von dem Leitrechner an den Bordrechner der Arbeitsmaschine übermittelt werden. Um dabei die telemetrische Datenverbindung optimal zu nutzen und das Datentransfervolumen zu minimieren, werden von dem Bordrechner der Arbeitsmaschine die akquirierten Daten danach bewertet, ob diese an den Leitrechner übertragen werden müssen. Hierzu unterscheidet der Bordrechner zwischen Daten, die der maschineninternen Optimierung dienen, indem ein Steuerbefehl an einen Aktor der Arbeitsmaschine gesandt wird, und Daten, die der Leitrechner benötigt, um den aktuellen Betriebszustand der Arbeitsmaschine bestimmen zu können, beispielsweise die durch die Arbeitsmaschine bearbeiteten Flächen, aufgenommene oder verarbeitete Erntegutmengen, verbrauchte oder noch vorhandene Betriebsstoffe. Darüber hinaus ist es dem Leitrechner möglich, Daten selbsttätig von der Arbeitsmaschine anzurufen, wenn der Bordrechner zuvor einen Hinweis auf das Vorliegen bestimmter Datenkategorien übermittelt hat. In diesem Fall entscheidet der Leitrechner darüber, welche Daten von dem Bordrechner angefordert werden.

Nachteilig an dem Verfahren gemäß dem Stand der Technik ist, dass eine Bedienperson der Arbeitsmaschine keinerlei Einfluss darauf hat, welche Daten an eine entfernte Datenverarbeitungsvorrichtung übermittelt bzw. von dieser angefordert werden.

Somit liegt der Erfindung die Aufgabe zugrunde, ein System zum Datenaustausch zwischen zumindest einer Steuereinheit einer landwirtschaftlichen Arbeitsmaschine und zumindest einer entfernten Datenverarbeitungsvorrichtung bereitzustellen, welche eine Reglementierung des bidirektionalen Datenaustauschs ermöglicht.

Diese Aufgabe wird durch ein System zum Datenaustausch mit den Merkmalen des Anspruches 1 gelöst. Vorteilhafte Weiterbildungen sind Gegenstand der Unteransprüche.

Gemäß dem Anspruch 1 wird ein System zum Datenaustausch zwischen zumindest einer Steuereinheit einer landwirtschaftlichen Arbeitsmaschine und zumindest einer entfernten Datenverarbeitungsvorrichtung vorgeschlagen, wobei die zumindest eine Steuereinheit und die zumindest eine entfernte Datenverarbeitungsvorrichtung durch ein Kommunikationsmittel zum bidirektionalen Datenaustausch mittelbar oder unmittelbar miteinander verbunden sind. Erfindungsgemäß wird eine Reglementierung des bidirektionalen Datenaustauschs dadurch ermöglicht, dass die zumindest eine Steuereinheit eine Recheneinheit und eine Eingabe-Ausgabeeinheit umfasst, mittels derer die Steuereinheit dazu eingerichtet ist, dass eine Bedienperson der Arbeitsmaschine eine Auswahl von zu übermittelnden Daten trifft, deren Transfer zwischen der zumindest einen Steuereinheit und der zumindest einen entfernten Datenverarbeitungsvorrichtung erfolgen soll. Die Bedienperson der Arbeitsmaschine kann die zu übermittelnden Daten gezielt auswählen, welche einer externen Person mit einer, insbesondere mobilen, Datenverarbeitungsvorrichtung oder einer entfernten Datenverarbeitungsvorrichtung zur Verfügung gestellt werden. Diese Beschränkung der zu übermittelnden Daten kann beispielsweise vorgesehen sein, wenn die Unterstützung bei der Einstellung der Arbeitsmaschine durch eine externe Person von der Bedienperson angefordert wird und es für die Unterstützung nicht notwendig ist, alle spezifischen Daten der Arbeitsmaschine an die entfernte Datenverarbeitungsvorrichtung der externen Person zu übermitteln. Die Bedienperson kann selbstbestimmt entscheiden, welche Daten einer Auswahl aus einer Vielzahl von Daten tatsächlich übermittelt werden sollen.

Dabei kann die zumindest eine Steuereinheit und/oder die zumindest eine entfernte Datenverarbeitungsvorrichtung zur Ansteuerung zumindest eines Arbeitsorgans der landwirtschaftlichen Arbeitsmaschine eingerichtet sein. Neben der Ansteuerung des zumindest einen Arbeitsorgans durch die zumindest eine Steuereinheit ist somit auch eine Fernbedienung durch die zumindest eine entfernte Datenverarbeitungsvorrichtung möglich. Denkbar ist auch, dass die zumindest eine Steuereinheit als eine übergeordnete Steuereinheit mehrere Steuergeräte der landwirtschaftlichen Arbeitsmaschine koordiniert, die jeweils zumindest ein Arbeitsorgan der landwirtschaftlichen Arbeitsmaschine ansteuern. Beispielhaft hierfür seien ein Motorsteuergerät eines Antriebsmotors und/oder ein Getriebesteuergerät eines Getriebes der landwirtschaftlichen Arbeitsmaschine genannt, die durch ein Bussystem mit der übergeordneten Steuereinheit signaltechnisch in Verbindung stehen.

Des Weiteren kann die zumindest eine Steuereinheit dazu eingerichtet sein, für zumindest ein Arbeitsorgan der landwirtschaftlichen Arbeitsmaschine eine Auswahl von Parametern des zumindest einen Arbeitsorgans und/oder zumindest einer Sensorvorrichtung der Arbeitsmaschine zu generieren, welche für einen Transfer freizugeben sind. Es können auf diese Weise lediglich die Parametern des zumindest einen Arbeitsorgans und/oder zumindest einer Sensorvorrichtung der Arbeitsmaschine zur Übertragung freigegeben werden, welche für eine erste Einschätzung der aktuellen Betriebssituation durch eine externe Person erforderlich sind.

Insbesondere kann die zumindest eine Steuereinheit dazu eingerichtet sein, für das zumindest eine Arbeitsorgan eine Auswahl von Einstellparametern des zumindest einen Arbeitsorgans zu generieren, welche für einen Empfang von der zumindest einen entfernten Datenverarbeitungsvorrichtung freizugeben sind. Somit lässt sich der Zugriff auf Einstellparametern des zumindest einen Arbeitsorgans durch die zumindest eine entfernte Datenverarbeitungsvorrichtung durch die Bedienperson der Arbeitsmaschine beschränken oder ganz unterbinden.

Bevorzugt kann die zumindest eine Steuereinheit dazu eingerichtet sein, für das zumindest eine Arbeitsorgan eine Auswahl von Einstellparametern des zumindest einen Arbeitsorgans zu generieren, welche für einen Empfang von der zumindest einen entfernten Datenverarbeitungsvorrichtung freizugeben sind. Gemäß dieser vorteilhaften Weiterbildung kann die Bedienperson eine Beschränkung der Einstellparameter vornehmen, für welche von der zumindest einen entfernten Datenverarbeitungsvorrichtung Vorschläge für die Einstellparameter an die zumindest eine Steuereinheit übertragbar sind. Hierzu kann die zumindest eine Steuereinheit mittelbar oder unmittelbar mit einer oder mehreren Sensorvorrichtungen der Arbeitsmaschine in Verbindung stehen, welche Daten respektive Parameter des zumindest einen Arbeitsorgans erfassen, die von der zumindest einen Steuereinheit oder zumindest einem zwischen der Steuereinheit und dem zumindest einen Arbeitsorgan geschalteten Steuergerät ausgewertet werden können.

Vorzugsweise kann die zumindest eine Steuereinheit dazu eingerichtet sein, von der zumindest einen entfernten Datenverarbeitungsvorrichtung Anfragen für den Abruf von wenigstens einem Parameter des zumindest einen Arbeitsorgans zu empfangen, auszuwerten und auf der Eingabe-Ausgabeeinheit zur Auswahl durch die Bedienperson zur Anzeige zu bringen, und in Abhängigkeit von der Auswahl durch die Bedienperson ein Entscheidungssignal an die zumindest eine entfernte Datenverarbeitungsvorrichtung zu senden. Die Bedienperson wird über das Eingehen einer Anfrage von der zumindest einen entfernten Datenverarbeitungsvorrichtung visuell oder audio-visuell informiert und erhält damit in einem ersten Schritt die Möglichkeit, die Anfrage zuzulassen oder zu blockieren. In einem zweiten Schritt können bei Zulassung der Anfrage in Abhängigkeit von der Auswertung durch die Recheneinheit mittels der Eingabe-Ausgabeeinheit die Daten visualisiert werden, die von der zumindest einen entfernten Datenverarbeitungsvorrichtung angefordert werden.

Des Weiteren kann die zumindest eine Steuereinheit dazu eingerichtet sein, eine Auswahl von zu übermittelnden Daten zu treffen, welche durch die zumindest eine entfernte Datenverarbeitungsvorrichtung protokollierbar sind. Darüber hinaus ist es denkbar, die protokollierten Daten mit einem Verfallssignal zu übertragen, welches die Dauer einer Zwischenspeicherung der protokollierten Daten auf der zumindest einen entfernten Datenverarbeitungsvorrichtung zeitlich beschränkt.

Weiterhin kann zur Manipulation des zumindest einen Arbeitsorgans wenigstens ein von der zumindest einen Steuereinheit und/oder der zumindest einen entfernten Datenverarbeitungsvorrichtung ansteuerbarer Aktor vorgesehen sein. In Abhängigkeit von der Komplexität des jeweiligen anzusteuernden Arbeitsorgans der Arbeitsmaschine können ein oder mehrere Aktoren zusammenwirken, um das Arbeitsorgan zu betätigen und/oder einzustellen.

Gemäß einer bevorzugten Weiterbildung kann die zumindest eine Steuereinheit zum aktiven Verbindungsaufbau mit der zumindest einen entfernten Datenverarbeitungsvorrichtung eingerichtet sein. Hierzu kann die zumindest eine Steuereinheit ein Anfragesignal unter Verwendung des Kommunikationsmittels versenden, um eine oder mehrere im Empfangsbereich befindliche entfernte Datenverarbeitungsvorrichtungen selbsttätig zu kontaktieren. Dies kann beispielsweise dann der Fall sein, wenn Unterstützung für eine Einstellung eines Arbeitsorgans der Arbeitsmaschine durch eine externe Person mit einer geeigneten Datenverarbeitungsvorrichtung oder durch eine Analyse einer entfernten Datenverarbeitungsvorrichtung angefordert werden soll.

Insbesondere kann die zumindest eine entfernte Datenverarbeitungsvorrichtung stationär ausgeführt sein. Bei der stationär ausgeführten Datenverarbeitungsvorrichtung kann es sich beispielsweise um ein so genanntes Backend-System oder einen externen Server handeln, die sich beispielsweise auf einer Hofstelle oder in einem externen Rechenzentrum befinden.

Weiterhin kann die zumindest eine entfernte Datenverarbeitungsvorrichtung als eine tragbare Datenverarbeitungseinheit ausgeführt sein. Als tragbare bzw. mobile Datenverarbeitungseinheit kann beispielsweise ein Smartphone, ein Laptop, ein Tablet-PC oder dergleichen geeignet sein. Diese verfügen über eine Recheneinheit und eine Eingabe-Ausgabeeinheit, wodurch die Person, welche die tragbare bzw. mobile Datenverarbeitungseinheit mit sich führt, in die Lage versetzt ist, die von der Bedienperson der Arbeitsmaschine ausgewählten Daten von der zumindest einen Steuereinheit der Arbeitsmaschine zu empfangen, zu verarbeiten und zurückzusenden.

Gemäß einer Weiterbildung der Erfindung kann die zumindest eine entfernte, stationär ausgeführte Datenverarbeitungsvorrichtung dazu eingerichtet sein, von der zumindest einen Steuereinheit empfangene zu übermittelnde Daten in Abhängigkeit von einer Vorgabe selektiv oder vollständig zurückzuhalten.

Bevorzugt kann das Kommunikationsmittel jeweils ein an der Arbeitsmaschine angeordnetes sowie der zumindest einen entfernten Datenverarbeitungsvorrichtung zugeordnetes Kommunikationsmodul umfassen. Die Kommunikationsmodule können in Abhängigkeit von ihrem räumlichen Abstand zueinander mittels unterschiedlicher Kommunikationsprotokolle miteinander in Verbindung treten.

Dabei kann das jeweilige Kommunikationsmodul mit einem Modul zur Spracheingabe und zur Sprachausgabe verbunden sein. Das Modul kann zumindest ein Mikrofon und einen Lautsprecher und/oder einen Kopfhörer umfassen. Ein oder mehrere Mikrofone können außen an der Arbeitsmaschine angeordnet sein. Dadurch kann die Bedienperson der Arbeitsmaschine auch von außerhalb der Kabine mit der zumindest einen Steuereinheit kommunizieren. Durch das Modul zur Spracheingabe und Sprachausgabe ist es der Bedienperson der Arbeitsmaschine beziehungsweise der Person, welche die zumindest eine entfernte Datenverarbeitungsvorrichtung verwendet, möglich, mittels natürlichsprachiger Kommunikation die zumindest eine Steuereinheit der Arbeitsmaschine sowie die zumindest eine entfernte Datenverarbeitungsvorrichtung zu bedienen.

Weiterhin kann das Kommunikationsmodul der zumindest einen Steuereinheit der Arbeitsmaschine dazu eingerichtet sein, in Abhängigkeit von einer Vorgabe zu übermittelnde Daten selektiv oder vollständig zurückzuhalten. Hierzu kann das Kommunikationsmodul von der Recheneinheit angesteuert werden, um die von der Bedienperson der Arbeitsmaschine getroffene Auswahl bezüglich des Datentransfers umzusetzen.

Vorzugsweise kann die landwirtschaftliche Arbeitsmaschine eine selbstfahrende Erntemaschine oder ein Traktor, insbesondere mit einem Anbaugerät, einer Ballenpresse oder einem Transport- oder Ladewagen, sein.

Die vorliegende Erfindung wird nachstehend anhand eines in den Zeichnungen dargestellten Ausführungsbeispieles näher erläutert.

Es zeigen:
- Fig. 1: eine schematische Darstellung eines Systems zum Datenaustausch zwischen zumindest einer Steuereinheit einer landwirtschaftlichen Arbeitsmaschine und zumindest einer entfernten Datenverarbeitungsvorrichtung;
- Fig. 2: eine schematische Darstellung der zumindest einen Steuereinheit und der zumindest einer entfernten Datenverarbeitungsvorrichtung; und
- Fig. 3: ein stark vereinfachtes Flussdiagramm zur Veranschaulichung des Ablaufs des Datenaustauschs.

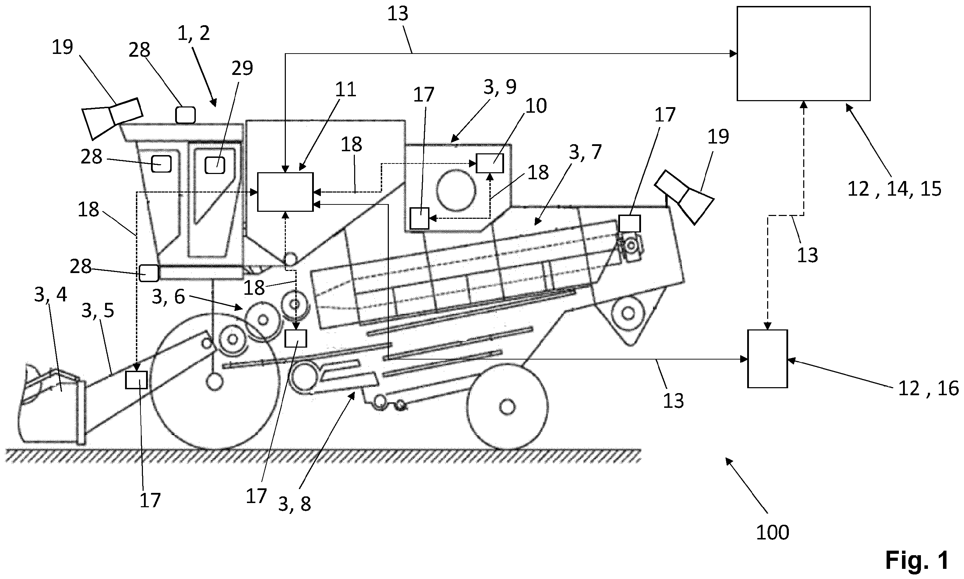

Fig. 1 zeigt eine schematische Darstellung eines Systems 100 zum Datenaustausch zwischen zumindest einer Steuereinheit 11 einer landwirtschaftlichen Arbeitsmaschine 1 und zumindest einer entfernten Datenverarbeitungsvorrichtung 12. Im dargestellten Ausführungsbeispiel ist die landwirtschaftliche Arbeitsmaschine 1 als eine selbstfahrende Erntemaschine, hier als ein Mähdrescher 2, ausgeführt. Der Mähdrescher umfasst ein als Anbaugerät ausgeführter Vorsatzgerät 4, welches am Schrägförderer 5 angeordnet ist. Dem Schrägförderer 5 ist eine Dreschvorrichtung 6 nachgeordnet, die im dargestellten Ausführungsbeispiel als ein nach dem Tangentialflussprinzip Mehrtrommel-Dreschwerk ausgeführt ist. Weiterhin umfasst der Mähdrescher 2 eine Abscheidevorrichtung 7, die als Axial-Trennrotoren oder als Hordenschüttler ausgeführt sein kann, sowie eine Reinigungsvorrichtung 8. Der Mähdrescher 2 wird von einem als Verbrennungsmotor ausgeführten Antriebsmotor 9 angetrieben. Das Vorsatzgerät 4, der Schrägförderer 5, die Dreschvorrichtung 6, die Abscheidevorrichtung 7, die Reinigungsvorrichtung 8 sowie der Antriebsmotor 9 werden nachfolgend allgemein als Arbeitsorgane 3 bezeichnet. Die Ansteuerung des Antriebsmotors 9 erfolgt in der Regel durch ein Steuergerät 10, hier ein Motorsteuergerät. Die vorstehende Aufzählung der Arbeitsorgane 3 des Mähdreschers 2 ist nicht abschließend zu verstehen. Der Mähdrescher 2 umfasst zumindest eine Steuereinheit 11, die mit zumindest einer entfernten Datenverarbeitungsvorrichtung 12 durch ein Kommunikationsmittel 13 zum bidirektionalen Datenaustausch mittelbar oder unmittelbar miteinander verbunden ist.

Eine entfernte Datenverarbeitungsvorrichtung 12 kann eine Steuereinheit 14 einer weiteren Arbeitsmaschine 1 sein oder ein externer Server oder Backend-System 15, welches sich beispielsweise auf einer Hofstelle oder in einem externen Rechenzentrum befindet. Die entfernte Datenverarbeitungsvorrichtung 12 kann auch als eine tragbare bzw. mobile Datenverarbeitungseinheit 16 ausgeführt sein, die von einer externen Person 31 mitgeführt wird. Als tragbare bzw. mobile Datenverarbeitungseinheit 16 ist insbesondere ein Smartphone, ein Laptop, ein Tablet-PC oder dergleichen geeignet.

Jede landwirtschaftliche Arbeitsmaschine 1 umfasst zumindest ein Arbeitsorgan 3, welches der Bearbeitung oder Verarbeitung eines Feldes und/oder von Erntegut sowie dem Transport dienen kann. Eines oder mehrere Arbeitsorgane 3 der Arbeitsmaschine 1 können zur Ansteuerung jeweils ein separates Steuergerät 10 aufweisen. Die Arbeitsorgane 3 sind in Abhängigkeit von ihrer Funktions- und Arbeitsweise jeweils mit zumindest einer Sensorvorrichtung 17 ausgeführt, welche der Erfassung von Parametern des Arbeitsorgans 3 dient. Lediglich exemplarisch sind mehrere Sensorvorrichtungen 17 dargestellt, welche beispielsweise die Schichthöhe von aufgenommenem Erntegut im Schrägförderer 5, die Drehzahl der Dreschtrommel der Dreschvorrichtung 6 und/oder den Abstand von Dreschtrommel und Dreschkorb, die Drehzahl der Abscheidevorrichtung 7, die Antriebsdrehzahl des Antriebsmotors 9 erfassen, um nur einige Beispiele für sensorisch zu erfassende Parameter der Arbeitsorgane 3 zu nennen. Die Sensorvorrichtungen 17 stehen beispielsweise durch ein Bussystem 18 mit dem Steuergerät 10 und/oder der Steuereinheit 11 mittelbar oder unmittelbar in Verbindung. Weiterhin können an der Arbeitsmaschine 1 respektive dem Mähdrescher 2 optische Sensorvorrichtungen 19 angeordnet sein. Diese können dazu dienen, das Vorfeld sowie das Vorsatzgerät 4 als ein Arbeitsorgan 3 der Arbeitsmaschine 1 bzw. des Mähdreschers 2 zu erfassen. Eine im Heckbereich angeordnete optische Sensorvorrichtung 19 kann dazu dienen, das Arbeitsergebnis des Mähdreschers 2 zu erfassen. Im Fall des Mähdreschers 2 kann dies die Stoppelhöhe des abgeernteten Feldes sein oder die Ausbringung von Stroh als Schwad oder in gehäckselter Form.

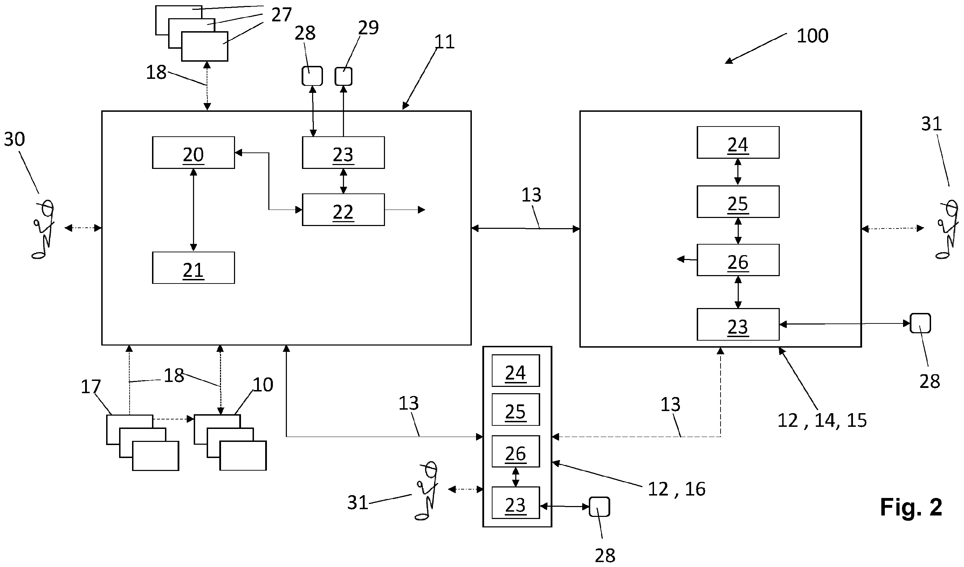

In Fig. 2 ist eine schematische Darstellung der zumindest einen Steuereinheit 11 der Arbeitsmaschine 1 und der zumindest einer entfernten Datenverarbeitungsvorrichtung 12 des Systems 100 dargestellt. Die zumindest eine Steuereinheit 11 umfasst eine Recheneinheit 20, eine Eingabe-Ausgabeeinheit 21 sowie ein Kommunikationsmodul 22. Die Eingabe-Ausgabeeinheit 21 der Steuereinheit 11 kann beispielsweise als separater Bildschirm mit einer, insbesondere virtuellen, Tastatur ausgeführt sein. Das Kommunikationsmodul 22 kann mit einem Modul 23 zur Spracheingabe und zur Sprachausgabe verbunden sein. Das Modul 23 umfasst zur Spracheingabe zumindest ein Mikrofon 28. Vorzugsweise sind mehrere Mikrofone 28 vorgesehen, von denen im Fall der als Mähdrescher 2 ausgeführten Arbeitsmaschine 1 wenigstens eines in der Kabine des Mähdreschers 2 und weitere außen am Mähdrescher 2 respektive der Arbeitsmaschine 1 angeordnet sind. Weiterhin umfasst das Modul 23 zur Sprachausgabe zumindest einen Lautsprecher 29 und/oder einen Kopfhörer. Insbesondere ist der Kopfhörer mit einem Mikrofon 28 ausgestattet. Das Modul 23 umfasst eine Recheneinheit 20 zur Ausführung einer Spracherkennungssoftware, um mittels des wenigstens einen Mikrofons 28 empfangene, von einer Bedienperson 30 gesprochene Anweisungen interpretieren und an die Recheneinheit 20 übermitteln zu können. Umgekehrt werden von der Recheneinheit 20 kommende Steuerbefehle 20 von der Spracherkennungssoftware in eine Sprachausgabe umgewandelt und an den zumindest einen Lautsprecher 29 und/oder den Kopfhörer zur Ausgabe übertragen. Die Bedienperson 30 interagiert mit der Steuereinheit 11 der Arbeitsmaschine durch die Eingabe-Ausgabeeinheit 21 und/oder das Modul 23. Mit 31 sind Personen bezeichnet, die ihrerseits mit der entfernten Datenverarbeitungsvorrichtung 12 interagieren.

Die Steuereinheit 11 steht mittels des Bussystems 18 mittelbar oder unmittelbar mit dem zumindest einen Steuergerät 10 sowie den Sensoreinrichtungen 17 signaltechnisch in Verbindung. Zudem kann die Steuereinheit 11 mittels des Bussystems 18 mit Aktoren 27 der Arbeitsmaschine 1 verbunden sein. Aktoren 27 der Arbeitsmaschine 1 können beispielsweise Hydraulikzylinder, Elektro- oder Hydraulikmotoren und dergleichen mehr sein, die zur Einstellung bzw. Verstellung von Einstellparametern der Arbeitsorgane 3 dienen. Der zur Manipulation des zumindest einen Arbeitsorgans 3 vorgesehene wenigstens eine Aktor 27 ist von der Steuereinheit 11 und/oder der zumindest einen entfernten Datenverarbeitungsvorrichtung 12 ansteuerbar.

Die entfernte Datenverarbeitungsvorrichtung 12, 14, 15 bzw. die tragbare Datenverarbeitungseinheit 12, 16 umfassen ebenfalls zumindest eine Recheneinheit 24, eine Eingabe-Ausgabeeinheit 25 sowie ein Kommunikationsmodul 26. Die Kommunikationsmodule 22 bzw. 26 können in Abhängigkeit von ihrem räumlichen Abstand zueinander mittels unterschiedlicher Kommunikationsprotokolle miteinander in Verbindung treten. Im unmittelbaren Umfeld der Arbeitsmaschine 1 ist eine drahtlose Kommunikation mit der tragbaren Datenverarbeitungseinheit 16 oder der Steuereinheit 14 einer in unmittelbarer Nähe befindlichen weiteren Arbeitsmaschine beispielsweise mittels Bluetooth oder dergleichen als Kommunikationsmittel 13 möglich. Größere Entfernungen zu einer entfernten Datenverarbeitungsvorrichtung 12, die als Backend-System 15 ausgeführt ist, können beispielsweise mittels Mobilfunk als Kommunikationsmittel 13 überbrückt werden.

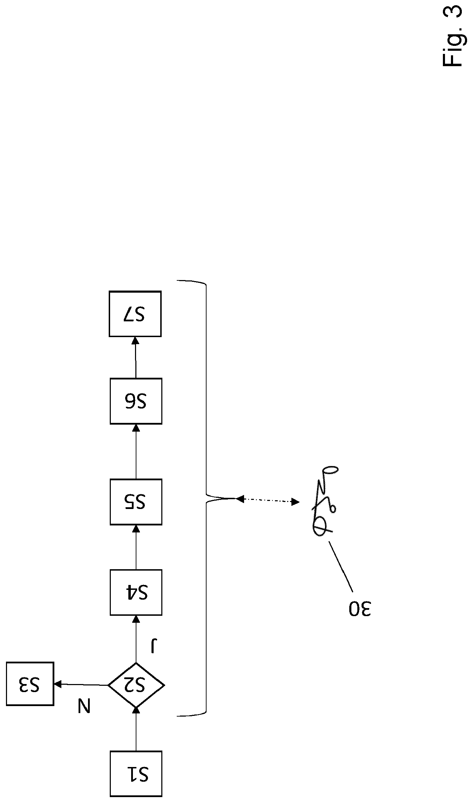

Die Darstellung Fig. 3 zeigt ein stark vereinfachtes Flussdiagramm zur Veranschaulichung des Ablaufs des Datenaustauschs durch das System 100.

In einem ersten Schritt S1 erfolgt ein Verbindungsaufbau zwischen der Steuereinheit 11 und der entfernten Datenverarbeitungsvorrichtung 12, 14, 15, 16. Ursächlich für den Verbindungsaufbau kann eine von der Steuereinheit 11 initiierte gerichtete oder ungerichtete Anfrage für einen Kommunikationsaufbau an eine oder mehrere entfernte Datenverarbeitungsvorrichtungen 12, 14, 15, 16 sein. Unter einer ungerichteten Anfrage ist zu verstehen, dass das Kommunikationsmodul 22 der Steuereinheit 11 ein Broadcastsignal versendet und auf eine Antwort des Kommunikationsmoduls 26 einer Datenverarbeitungsvorrichtung 12 wartet. Alternativ kann die Steuereinheit 14 einer weiteren Arbeitsmaschine 1 oder das Backend-System 15 eine gerichtete Anfrage für den Kommunikationsaufbau an die Steuereinheit 11 übermitteln. Hintergrund einer solchen Anfrage kann beispielsweise die Anforderung der Unterstützung der Bedienperson 30 bei der Einstellung eines oder mehrerer Arbeitsorgane 3 der Arbeitsmaschine 1 sein. Denkbar ist auch die Durchführung einer Diagnose eines oder mehrerer Arbeitsorgane 3 der Arbeitsmaschine 1.

In einem nachfolgenden Schritt S2 entscheidet die Bedienperson 30 darüber, ob und mit welcher entfernten Datenverarbeitungsvorrichtung 12 eine Verbindung zum bidirektionalen Datenaustausch aufgebaut wird. Hierzu kann die Steuereinheit 11 dazu eingerichtet sein, eine entfernte Datenverarbeitungsvorrichtung 12 anhand eines von dieser übertragenen Typisierungssignals zu identifizieren. Wird die Anfrage zum Verbindungsaufbau von der Bedienperson 30 abgelehnt, wird im Schritt S3 eine entsprechende Entscheidung an die anfragende entfernte Datenverarbeitungsvorrichtung 12 gesandt.

Bejahendenfalls können in einem weiteren Schritt S4 von der entfernten Datenverarbeitungsvorrichtung 12 Informationen darüber angefordert werden, welche Daten von der Steuereinheit 11 zum bidirektionalen Datenaustausch bereitgestellt werden sollen. Die bereitzustellenden Daten umfassen insbesondere sensorisch bestimmbare Parameter der Arbeitsorgane 3. Darüber hinaus können die angeforderten Daten auch Signale der Sensorvorrichtungen 17 und/oder der optischen Sensorvorrichtungen 19 umfassen.

In einem weiteren Schritt S5 wird der Inhalt der Antwort auf die gemäß dem Schritt S4 an die entfernten Datenverarbeitungsvorrichtung 12 gesandte Anfrage verifiziert. Hierfür ist die zumindest eine Steuereinheit 11 dazu eingerichtet, von der zumindest einen entfernten Datenverarbeitungsvorrichtung 12 Anfragen für den Abruf von wenigstens einem Parameter des zumindest einen Arbeitsorgans 3 zu empfangen, auszuwerten und auf der Eingabe-Ausgabeeinheit 21 zur Auswahl zur Anzeige zu bringen, und in Abhängigkeit von der Auswahl durch die Bedienperson 30 ein Entscheidungssignal an die zumindest eine entfernte Datenverarbeitungsvorrichtung 12 zu senden. Das Entscheidungssignal enthält Informationen darüber, welche Daten von der zumindest einen Steuereinheit 11 bereitgestellt werden. Die entfernte Datenverarbeitungsvorrichtung 12 interpretiert dieses Entscheidungssignal. Dabei kann das Entscheidungssignal mittels der der Eingabe-Ausgabeeinheit 25 der entfernten Datenverarbeitungsvorrichtung 12 der Person 32 zur Kenntnis gebracht werden.

Für den Fall, dass die Steuereinheit 11 den Verbindungsaufbau mit zumindest eine entfernten Datenverarbeitungsvorrichtung 12 initiiert hat, kann die zumindest eine Steuereinheit 11 dazu eingerichtet sein, für zumindest ein Arbeitsorgan 3 der landwirtschaftlichen Arbeitsmaschine 1 eine Mindestauswahl von Parametern des zumindest einen Arbeitsorgans 3 und/oder zumindest einer der Sensorvorrichtungen 17, 19 der Arbeitsmaschine 1 zu generieren, welche für einen Transfer durch die Bedienperson 30 freizugeben sind. Die Anzeige und Auswahl der für den Transfer freizugebenden Daten erfolgt vorzugsweise mittels der Eingabe-Ausgabeeinheit 21 der Steuereinheit 11 durch eine entsprechende Betätigung durch die Bedienperson 30 der Arbeitsmaschine 1.

Des Weiteren kann die zumindest eine Steuereinheit 11 dazu eingerichtet sein, eine spezifische Auswahl von zu übermittelnden Daten zu treffen, welche durch die zumindest eine entfernte Datenverarbeitungsvorrichtung 12 protokollierbar sind.

Im Schritt S6 trifft die Bedienperson 30 der Arbeitsmaschine 1 die Auswahl von zu übermittelnden Daten trifft, deren Transfer zwischen der zumindest einen Steuereinheit 11 und der zumindest einen entfernten Datenverarbeitungsvorrichtung 12 erfolgen soll. Die Auswahl durch die Bedienperson 30 kann ebenfalls mittels der Eingabe-Ausgabeeinheit 21 oder sprachgesteuert durch das Modul 23 erfolgen.

Im anschließenden Schritt S7 erfolgt der Transfer der Daten im Rahmen der erfolgten Freigabe durch die Bedienperson 30. Hierzu kann das Kommunikationsmodul 22 der Steuereinheit 11 der Arbeitsmaschine 1 dazu eingerichtet sein, in Abhängigkeit von einer Vorgabe zu übermittelnde Daten selektiv oder vollständig zurückzuhalten.

Die tragbare Datenverarbeitungseinheit 16 ist dazu eingerichtet, mit der Steuereinheit 11 der Arbeitsmaschine 1 unmittelbar zu kommunizieren oder mittelbar durch einen Verbindungsaufbau über das Kommunikationsmittel 13 mit einer entfernten, stationär ausgeführten Datenverarbeitungsvorrichtung 12, welche die Anfrage an die Steuereinheit 11 weiterleitet. Dabei kann die zumindest eine entfernte, stationär ausgeführte Datenverarbeitungsvorrichtung 12 dazu eingerichtet sein, von der Steuereinheit 11 empfangene zu übermittelnde Daten in Abhängigkeit von einer Vorgabe durch die Bedienperson 30 der Arbeitsmaschine 1 selektiv oder vollständig zurückzuhalten.

Erfindungsgemäß wird also eine Reglementierung des bidirektionalen Datenaustauschs durch eine Bedienperson 30 ermöglicht, indem die zumindest eine Steuereinheit 11 dazu eingerichtet ist, dass die Bedienperson 30 der Arbeitsmaschine 1 eine Auswahl von zu übermittelnden Daten trifft, deren Transfer zwischen der zumindest einen Steuereinheit 11 und der zumindest einen entfernten Datenverarbeitungsvorrichtung 12 erfolgen soll. Die Bedienperson 30 der Arbeitsmaschine 1 kann die zu übermittelnden Daten gezielt auswählen, welche einer externen Person 31 mit einer tragbaren Datenverarbeitungseinheit 12, 16 oder einer entfernten Datenverarbeitungsvorrichtung 12, 14, 15 zur Verfügung gestellt werden. Die gezielte Auswahl erfolgt im Kontext mit der Auswertung der Anfrage durch die zumindest eine entfernte Datenverarbeitungsvorrichtung 12 oder bei einer Anfrage, die von der zumindest einen Steuereinheit 11 ausgeht, in Abhängigkeit von der Auswahl aus den insgesamt übertragbaren Parametern des betroffenen Arbeitsorgans 3 und/oder der Sensorvorrichtungen 17, 19. Eine Beschränkung der zu übermittelnden Daten kann beispielsweise vorgesehen sein, wenn die Unterstützung bei der Einstellung der Arbeitsmaschine 1 durch eine externe Person 31 von der Bedienperson 30 angefordert wird und es für die Unterstützung nicht notwendig ist, alle spezifischen Daten der Arbeitsmaschine 1 respektive der Arbeitsorgane 3 oder Sensorvorrichtungen 17, 19 an die entfernte Datenverarbeitungsvorrichtung 12 der externen Person 31 zu übermitteln.

Das System 100 zum Datenaustausch beschränkt sich nicht auf eine als Mähdrescher 2 ausgeführte Arbeitsmaschine 1, sondern umfasst auch andere landwirtschaftliche Arbeitsmaschinen wie einen selbstfahrenden Feldhäcksler, eine Ballenpresse, einen Transportwagen oder einen Traktor, insbesondere mit einem Anbaugerät.

### Bezugszeichenliste

| | | | |
|---|---|---|---|
| 1 | Arbeitsmaschine | 31 | Person |
| 2 | Mähdrescher | 100 | System |
| 3 | Arbeitsorgan | | |
| 4 | Vorsatzgerät | S1 | Schritt |
| 5 | Schrägförderer | S2 | Schritt |
| 6 | Dreschvorrichtung | S3 | Schritt |
| 7 | Abscheidevorrichtung | S4 | Schritt |
| 8 | Reinigungsvorrichtung | S5 | Schritt |
| 9 | Antriebsmotor | S6 | Schritt |
| 10 | Steuergerät | S7 | Schritt |
| 11 | Steuereinheit | | |
| 12 | Datenverarbeitungsvorrichtung | | |
| 13 | Kommunikationsmittel | | |
| 14 | Steuereinheit | | |
| 15 | Backend-System | | |
| 16 | Tragbare Datenverarbeitungseinheit | | |
| 17 | Sensorvorrichtung | | |
| 18 | Bussystem | | |
| 19 | Optische Sensorvorrichtung | | |
| 20 | Recheneinheit | | |
| 21 | Eingabe-Ausgabeeinheit | | |
| 22 | Kommunikationsmodul | | |
| 23 | Modul | | |
| 24 | Recheneinheit | | |
| 25 | Eingabe-Ausgabeeinheit | | |
| 26 | Kommunikationsmodul | | |
| 27 | Aktor | | |
| 28 | Mikrofon | | |
| 29 | Lautsprecher | | |
| 30 | Bedienperson | | |

## Patentansprüche

1. System (100) zum Datenaustausch zwischen zumindest einer Steuereinheit (11) einer landwirtschaftlichen Arbeitsmaschine (1, 2) und zumindest einer entfernten Datenverarbeitungsvorrichtung (12, 14, 15,16), wobei die zumindest eine Steuereinheit (11) und die zumindest eine entfernte Datenverarbeitungsvorrichtung (12, 14, 15,16) durch ein Kommunikationsmittel (13) zum bidirektionalen Datenaustausch mittelbar oder unmittelbar miteinander verbunden sind, **dadurch gekennzeichnet, dass** die zumindest eine Steuereinheit (11) eine Recheneinheit (20) und eine Eingabe-Ausgabeeinheit (21) umfasst, mittels derer die Steuereinheit (11) dazu eingerichtet ist, dass eine Bedienperson (30) der Arbeitsmaschine (1) eine Auswahl von zu übermittelnden Daten trifft, deren Transfer zwischen der zumindest einen Steuereinheit (11) und der zumindest einen entfernten Datenverarbeitungsvorrichtung (12, 14, 15,16) erfolgen soll.

2. System (100) nach Anspruch 1, **dadurch gekennzeichnet, dass** die zumindest eine Steuereinheit (11) und/oder die zumindest eine entfernte Datenverarbeitungsvorrichtung (12, 14, 15,16) zur Ansteuerung zumindest eines Arbeitsorgans (3) der landwirtschaftlichen Arbeitsmaschine (1, 2) eingerichtet ist.

3. System (100) nach Anspruch 2, **dadurch gekennzeichnet, dass** die zumindest eine Steuereinheit (11) dazu eingerichtet ist, für zumindest ein Arbeitsorgan (3) der landwirtschaftlichen Arbeitsmaschine (1) eine Auswahl von Parametern des zumindest einen Arbeitsorgans (3) und/oder zumindest einer Sensorvorrichtung (17, 19) der Arbeitsmaschine (1) zu generieren, welche für einen Transfer freizugeben sind.

4. System (100) nach Anspruch 2 oder 3, **dadurch gekennzeichnet, dass** die zumindest eine Steuereinheit (11) dazu eingerichtet ist, für das zumindest eine Arbeitsorgan (3) eine Auswahl von Einstellparametern des zumindest einen Arbeitsorgans (3) zu generieren, welche für einen Empfang von der zumindest einen entfernten Datenverarbeitungsvorrichtung (12, 14, 15,16) freizugeben sind.

5. System (100) nach einem der Ansprüche 2 bis 4, **dadurch gekennzeichnet, dass** die zumindest eine Steuereinheit (11) dazu eingerichtet ist, von der zumindest einen entfernten Datenverarbeitungsvorrichtung (12, 14, 15,16) Anfragen für den Abruf von wenigstens einem Parameter des zumindest einen Arbeitsorgans (3) zu empfangen, auszuwerten und auf der Eingabe-Ausgabeeinheit (21) zur Auswahl zur Anzeige zu bringen, und in Abhängigkeit von der Auswahl durch die Bedienperson (30) ein Entscheidungssignal an die zumindest eine entfernte Datenverarbeitungsvorrichtung (12, 14, 15,16) zu senden.

6. System (100) nach einem der vorangehenden Ansprüche, **dadurch gekennzeichnet, dass** die zumindest eine Steuereinheit (11) dazu eingerichtet ist, eine Auswahl von zu übermittelnden Daten zu treffen, welche durch die zumindest eine entfernte Datenverarbeitungsvorrichtung (12, 14, 15,16) protokollierbar sind.

7. System (100) nach einem der vorangehenden Ansprüche, **dadurch gekennzeichnet, dass** zur Manipulation des zumindest einen Arbeitsorgans (3) wenigstens ein von der zumindest einen Steuereinheit (11) und/oder der zumindest einen entfernten Datenverarbeitungsvorrichtung (12, 14, 15,16) ansteuerbarer Aktor (27) vorgesehen ist.

8. System (100) nach einem der vorangehenden Ansprüche, **dadurch gekennzeichnet, dass** die zumindest eine Steuereinheit (11) zum aktiven Verbindungsaufbau mit der zumindest einen entfernten Datenverarbeitungsvorrichtung (12, 14, 15,16) eingerichtet ist.

9. System (100) nach einem der vorangehenden Ansprüche, **dadurch gekennzeichnet, dass** die zumindest eine entfernte Datenverarbeitungsvorrichtung (12, 15) stationär ausgeführt ist.

10. System (100) nach einem der vorangehenden Ansprüche, **dadurch gekennzeichnet, dass** die zumindest eine entfernte Datenverarbeitungsvorrichtung (12) als eine Steuereinheit (14) einer weiteren Arbeitsmaschine oder als eine tragbare Datenverarbeitungseinheit (16) ausgeführt ist.

11. System (100) nach Anspruch 10, **dadurch gekennzeichnet, dass** die zumindest eine entfernte, stationär ausgeführte Datenverarbeitungsvorrichtung (12, 15) dazu eingerichtet ist, von der zumindest einen Steuereinheit (11) empfangene zu übermittelnde Daten in Abhängigkeit von einer Vorgabe selektiv oder vollständig zurückzuhalten.

12. System (100) nach einem der vorangehenden Ansprüche, **dadurch gekennzeichnet, dass** das Kommunikationsmittel (13) jeweils ein an der Arbeitsmaschine (1) angeordnetes sowie der zumindest einen entfernten Datenverarbeitungsvorrichtung (12, 14, 15,16) zugeordnetes Kommunikationsmodul (22, 26) umfasst.

13. System (100) nach Anspruch 12, **dadurch gekennzeichnet, dass** das jeweilige Kommunikationsmodul (22, 26) mit einem Modul (23) zur Spracheingabe und zur Sprachausgabe verbunden ist.

14. System (100) nach Anspruch 12 oder 13, **dadurch gekennzeichnet, dass** das Kommunikationsmodul (22) der Steuereinheit (11) der Arbeitsmaschine (1) oder der Datenverarbeitungsvorrichtung (12, 14, 15,16) dazu eingerichtet ist, in Abhängigkeit von einer Vorgabe durch die Bedienperson (30) der Arbeitsmaschine (1) zu übermittelnde Daten selektiv oder vollständig zurückzuhalten.

15. System (100) nach einem der vorangehenden Ansprüche, **dadurch gekennzeichnet, dass** die landwirtschaftliche Arbeitsmaschine (1) eine selbstfahrende Erntemaschine oder ein Traktor, insbesondere mit einem Anbaugerät, ist.
